# EUROPÄISCHE PATENTANMELDUNG

(11) **EP 4 663 028 A1**
(43) Veröffentlichungstag der Anmeldung: **17.12.2025**
(21) Anmeldenummer: 24181346.8
(22) Anmeldetag: 11.06.2024
(51) Int. Cl.: A23N 12/00, A23N 12/02

(54) **VERFAHREN ZUM BEREITSTELLEN EINES VERARBEITBAREN NUTZANTEILS AN ZUCKERRÜBEN AUS EINEM ZUCKERRÜBEN ENTHALTENDEN MASSENSTROM UND ZUCKERPRODUKTIONSANLAGE**

(71) Anmelder: Pfeifer & Langen IP GmbH, 50858 Köln (DE)
(72) Erfinder: KLOSTERHALFEN, Wolfgang, 50858 KÖLN (DE); BURKHARDT, Mark Oliver, 64319 Pfungstadt (DE)
(74) Vertreter: Kutzenberger Wolff & Partner

(57) **Zusammenfassung**

Die vorliegende Erfindung betrifft ein **Verfahren (1)** zum Bereitstellen eines verarbeitbaren Nutzanteils an Zuckerrüben (17) aus einem Zuckerrüben enthaltenden Massenstrom, wobei das Verfahren wenigstens die folgenden Schritte umfasst:
I. in einem ersten Verfahrensschritt (11) werden in einem Abscheider Kleinteile aus dem Massenstrom entfernt;
II. in einem auf den ersten Verfahrensschritt folgenden zweiten Verfahrensschritt (12) werden Fremdkörper mittels einer ersten Erkennungseinheit in dem Massenstrom automatisch erkannt und die erkannten Fremdkörper (14) mittels einer ersten Sortiereinheit gezielt aussortiert, um einen Nutzanteil an Zuckerrüben (13) bereitzustellen;
III. in einem auf den zweiten Verfahrensschritt folgenden dritten Verfahrensschritt (15) wird der Nutzanteil an Zuckerrüben (13) unter der Zufuhr von Wasser (16) gewaschen, so dass ein verarbeitbarer Nutzanteil an Zuckerrüben (17) bereitgestellt wird.

## Beschreibung

### Stand der Technik

Die vorliegende Erfindung betrifft ein Verfahren zum Bereitstellen eines verarbeitbaren Nutzanteils an Zuckerrüben aus einem Zuckerrüben enthaltenden Massenstrom. Ein weiterer Gegenstand der Erfindung ist eine Zuckerproduktionsanlage mit einer Vorrichtung zum Bereitstellen eines verarbeitbaren Nutzanteils an Zuckerrüben aus einem Zuckerrüben enthaltenden Massenstrom und einer Schneidemaschine zum Schneiden von Zuckerrübenschnitzeln aus dem verarbeitbaren Nutzanteil von Zuckerrüben.

Zuckerrüben werden üblicherweise von einem Feld mechanisch geerntet und vor der Weiterverarbeitung zunächst auf Feldmieten zwischengelagert. Danach werden Sie mit Rübenlademäusen vorgereinigt, in LKW's verladen und in die Zuckerfabriken transportiert. Während des Ernteprozesses werden die Zuckerrüben mechanisch aus dem Boden gehoben, wobei häufig bei diesem Schritt ungewollte Fremdkörper mit aufgelesen werden. Diese ungewollten Fremdkörper können beispielsweise Steine, Erde, Flaschen (Glas, Plastik und andere), Metalle, Kunststoffe, Holz, Kraut, Blätter etc. sein. In der Zuckerfabrik werden die Rüben dann entweder direkt der Verarbeitung zugeführt oder als Reserve zwischengelagert.

Bei der industriellen Zuckerproduktion in einer Zuckerproduktionsanlage wird typischerweise zunächst eine Rübenaufbereitung vorgenommen, in welcher die erwähnten Fremdkörper entfernt werden. Zu den Fremdkörpern zählen unter anderem auch schlechte und zu kleine oder unreife Zuckerrüben oder Bruchstücke von Zuckerrüben. Diese sind insbesondere bei der weiteren Verarbeitung der Zuckerrüben unerwünscht. Um verarbeitbare Zuckerrüben bereitzustellen, müssen diese Fremdkörper aussortiert werden und die nutzbaren Zuckerrüben gereinigt werden. Erst dann kann die Zuckerrübe als solche verarbeitet werden und Zucker extrahiert werden. Gemäß dem Stand der Technik werden die Zuckerrüben in der Rübenaufbereitung als Massenstrom mittels Wasser, beispielsweise in Schwemmkanälen, transportiert. Das Aussortieren der Fremdkörper erfolgt durch physikalische Trennverfahren wie Steinfänger (z.B. Gurt- und Trommelsteinfänger), Waschtrommeln, welche einen hohen Platzbedarf haben und einen hohen mechanischen Wartungsaufwand erfordern. Das Transportieren des Massenstroms an Zuckerrüben mittels Wasser innerhalb der Zuckerproduktionsanlage bringt zwar den Vorteil mit sich, dass die Zuckerrüben bereits beim Aussortieren der Fremdkörper gesäubert werden. Mit dem Wassertransport ist aber auch der Nachteil eines hohen Wasser- und Energiebedarfs verbunden. Darüber hinaus geben die Zuckerrüben während des Kontakts mit dem Wasser einen gewissen Anteil des in der Zuckerrübe vorhandenen Zuckers an das Wasser ab. Deshalb ist eine Abwasserreinigung notwendig, um die Zuckerbelastung (BSB / CSB) zu reduzieren. Ferner ist das Trennverfahren insbesondere in Verbindung mit dem nassen Transport der Zuckerrüben fehlerbehaftet, so werden entweder Zuckerrüben im physikalischen Trennverfahren beschädigt und/oder ein nicht zufriedenstellender Anteil an Fremdkörpern aus dem Massenstrom der Zuckerrüben aussortiert. Diese Zuckerrüben sind nicht direkt weiter verarbeitbar, und ein weiteres Trennverfahren gewünscht.

### Offenbarung der Erfindung

Vor diesem Hintergrund ist es Aufgabe der vorliegenden Erfindung, ein Verfahren zur kompakten, robusten und kosteneffizienten Bereitstellung von sauberen Zuckerrüben zu ermöglichen.

Die Aufgabe wird gelöst durch ein Verfahren zum Bereitstellen eines verarbeitbaren Nutzanteils an Zuckerrüben aus einem Zuckerrüben enthaltenden Massenstrom, wobei das Verfahren wenigstens die folgenden Schritte umfasst:
I. in einem ersten Verfahrensschritt werden in einem Abscheider Kleinteile aus dem Massenstrom entfernt;
II. in einem auf den ersten Verfahrensschritt folgenden zweiten Verfahrensschritt werden Fremdkörper mittels einer ersten Erkennungseinheit in dem Massenstrom automatisch erkannt und die erkannten Fremdkörper mittels einer ersten Sortiereinheit gezielt aussortiert, um einen Nutzanteil an Zuckerrüben bereitzustellen;
III. in einem auf den zweiten Verfahrensschritt folgenden dritten Verfahrensschritt wird der Nutzanteil an Zuckerrüben unter der Zufuhr von Wasser gewaschen, so dass ein verarbeitbarer Nutzanteil an Zuckerrüben bereitgestellt wird.

Gemäß der Erfindung werden im Rahmen der Rübenaufbereitung die Fremdkörper in dem Massestrom mittels der ersten Erkennungseinheit erkannt und dann mittels der ersten Sortiereinheit aus diesem Massestrom aussortiert. Auf diese Weise kann der Nutzanteil an Zuckerrüben von den Fremdkörpern separiert werden ohne auf physikalische Trennverfahren wie z.B. Gurt- oder Trommel-Steinfänger und Krautfänger zurückzugreifen. Hierdurch werden der Platzbedarf und der mechanische Instandhaltungsaufwand zur Rübenaufbereitung reduziert. Die Verwendung der ersten Erkennungseinheit und der ersten Sortiereinheit ermöglicht zudem, auf den Wassertransport beim Trennen zu verzichten, also den Massestrom umfassend die Zuckerrüben und die Fremdkörper im zweiten Verfahrensschritt trocken oder im Wesentlichen trocken zu transportieren. Trocken oder im Wesentlichen trocken schließt im Rahmen dieser Erfindung nicht aus, dass der Massenstrom von einem vorherigen Verfahrensschritt eine Restnässe aufweist. Hierdurch kann der Wasserverbrauch bei der Rübenaufbereitung drastisch reduziert werden. Allerdings ist es aufgrund des zumindest im Wesentlichen trocknen Transports im zweiten Verfahrensschritt erforderlich, in dem Massenstrom mitgeförderte Kleinteile aus diesem zu entfernen. Vorteilhafterweise werden Teile aussortiert, die insbesondere durch die Erkennungseinheit nicht oder nur mit geringer Wahrscheinlichkeit erkannt werden. Diese Abscheidung erfolgt erfindungsgemäß bevor der Massenstrom der Erkennungseinheit zugeführt wird. Ferner wird der Nutzanteil an Zuckerrüben stromabwärts der Sortiereinheit mittels Wasser gewaschen, um den verarbeitbaren Nutzanteil an Zuckerrüben zu erhalten. Die hierzu erforderliche Wassermenge ist gegenüber dem Stand der Technik stark reduziert und das erhaltene Abwasser ist aufgrund der kürzeren Kontaktzeit mit den Zuckerrüben weniger stark mit Zucker belastet, so dass der Aufwand für die Abwasserreinigung reduziert wird. Die Erkennung von Fremdkörpern im Wesentlichen trockenen Transport stellt vorteilhafterweise ein robustes und effizientes Erkennungsverfahren dar, wobei in Verbindung mit der Sortiereinheit die erkannten Fremdkörper aussortiert werden. Dies ermöglicht ein kosteneffizientes Verfahren, da vorteilhafterweise eine hohe Aussortierrate bei den Fremdkörpern erreicht werden kann.

Als Fremdkörper kommen gemäß der Erfindung insbesondere Steine, Erde, Flaschen (Glas, Plastik und andere), Metalle, Kunststoffe, Holz, Kraut, Blätter etc. von dem Nutzanteil an Zuckerrüben getrennt werden. Als Fremdkörper werden ferner auch verdorbene oder verrottete Zuckerrüben zunächst von dem Nutzanteil getrennt.

Bevorzugt werden in dem zweiten Verfahrensschritt die Fremdkörper mittels der Erkennungseinheit optisch erkannt. Die Erkennungseinheit kann zusätzlich zu den Fremdkörpern auch die in dem Massestrom enthaltenen Zuckerrüben, insbesondere optisch, erkennen.

Gemäß einer vorteilhaften Ausgestaltung der Erfindung ist vorgesehen, dass in dem zweiten Verfahrensschritt Objekte des Massenstroms, insbesondere Zuckerrüben und Fremdkörper, erkannt werden und die erkannten Objekte klassifiziert werden. Bevorzugt weist die Erkennungseinheit optische Detektoren auf, welche bei der Klassifizierung der erkannten Objekte unterstützen können. Im zweiten Verfahrensschritt wird vorzugsweise zunächst mittels der ersten Erkennungseinheit, insbesondere mittels der optischen Detektoren, ein Objekt erkannt, wobei dieses erkannte Objekt einer gewissen Klasse zugeordnet werden kann. Dafür kann die Erkennungseinheit eine Recheneinheit aufweisen, welche das erkannte Objekt einer Klasse zuordnet, wobei beispielsweise eine der folgenden Klassen verwendet wird: verwendbare Zuckerrübe; nicht verwendbare Zuckerrübe; Stein; Holz; Glas; Plastik; organisches Material (beispielsweise Kraut, Unkraut). Die Klassen können bei der Erkennungseinheit hinterlegt sein, wobei den Klassen bevorzugt gewisse Charakteristika zugewiesen werden anhand welcher die Erkennungseinheit das erkannte Objekt zuordnen kann. Charakteristika können beispielsweise Farbe, Größe und/oder Reflexionsintensität sein. Lediglich die Klasse verwendbare Zuckerrübe, welche keinen Fremdkörper darstellt, wird vorzugsweise nicht aussortiert. Auf Basis der Klassifizierung werden bevorzugt die Fremdkörper in einem weiteren Sortierschritt sortiert. So können die Fremdkörper anhand der Klassifizierung sortiert werden und dementsprechend weiterverarbeitet oder entsorgt werden. Die Sortiereinheit kann insbesondere durch die Recheneinheit angesteuert werden, wobei die Sortiereinheit vorzugsweise die erkannten Fremdkörper anhand der Klassifizierung gezielt aussortiert und weiter vorzugsweise anhand der Klassifizierung einordnet. Beispielsweise kann somit jeder Klasse ein Lager oder ein Platz oder ein Ort zugewiesen werden, wobei die Sortiereinheit die jeweiligen erkannten Objekte zu dem für diese Klasse vorgesehenen Ort hin befördert.

Gemäß einer vorteilhaften Ausgestaltung der Erfindung ist vorgesehen, dass im ersten Verfahrensschritt der Abscheider ein Partikelabscheider ist und/oder der erste Verfahrensschritt eine erste Vorwäsche aufweist, wobei die Vorwäsche insbesondere Sand, Kleinteile und/oder Erde aus dem Zuckerrüben enthaltenden Massenstrom ausspült und insbesondere stromaufwärts des Partikelabscheiders angeordnet ist. Eine Vorwäsche kann dabei helfen die Effizienz der Abtrennung der Fremdkörper im zweiten Verfahrensschritt zu erhöhen. Weiter ist die Abtrennung von Sand, Kleinteilen oder Erde vorteilhaft, da die Erde den anschließenden Trennprozess stören würde und durch die Abtrennung von Sand und Kleinteile ebenfalls nachfolgende Anlagenteile vor Abrasion und organischer Verschmutzung / Belagbildung geschützt werden. Der Transport des Massenstroms kann im ersten Verfahrensschritt entweder trocken oder nass sein. Bei einem Trockentransport werden Kleinteile, Sand und/oder Erde bevorzugt mittels eines Partikelabscheiders aussortiert. Es ist nicht zwangsläufig notwendig, dass eine erste Vorwäsche bei einem Trockentransport getätigt wird. Vorzugsweise kann beim Trockentransport eine Vorwäsche vor dem Partikelabscheider durchgeführt werden, wobei diese bereits groben Schmutz von den Zuckerrüben wäscht. Vorzugsweise werden bei einem Trocken- oder Nasstransport im ersten Verfahrensschritt zunächst eine erste Vorwäsche getätigt und folgend darauf besonders bevorzugt ein Wasserabscheider und/oder der Partikelabscheider geschaltet werden. Die erste Vorwäsche findet vorzugsweise unter der Zufuhr von Wasser statt. Der Partikelabscheider kann stromabwärts des Wasserabscheiders angeordnet sein. Der Wasserabscheider ermöglicht, dass im zweiten Verfahrensschritt ein im Wesentlichen trockener Massenstrom in die Erkennungseinheit transportiert wird. Die erste Vorwäsche vor der ersten Erkennungseinheit ermöglicht den Vorteil der besseren Erkennung der Zuckerrüben. Grobe Schmutzreste werden hier bereits abgetragen, so dass insbesondere eine optische Erkennung der Zuckerrüben besser möglich ist.

Gemäß einer vorteilhaften Ausgestaltung der Erfindung ist vorgesehen, dass der dritte Verfahrensschritt ein insbesondere mehrstufiges Reinigungsverfahren umfasst, wobei insbesondere zuerst in einer zweiten Vorwäsche Sand und Kleinteile aus dem Nutzanteil an Zuckerrüben unter der Zufuhr von Wasser ausgespült werden und darauffolgend der Nutzanteil an Zuckerrüben in einer Hauptwäsche, insbesondere in einer Trommel, unter der Zufuhr von Wasser gewaschen wird und/oder der Nutzanteil an Zuckerrüben in einer Nachwäsche, insbesondere in einer Sprühwaschanlage, gewaschen wird. Bevorzugt werden zunächst in der zweiten Vorwäsche Sand und Kleinteile durch die Zufuhr von Wasser ausgespült. Erst anschließend wird der vorgewaschene Nutzanteil an Zuckerrüben in die Hauptwäsche transportiert. Dies ist vorteilhaft, da Sand und Kleinteile bei der Hauptwäsche zumindest zu kleineren Beschädigungen der Zuckerrüben und/oder der Hauptwäscheeinheit führen können. In der Hauptwäsche werden die Zuckerrüben vorzugsweise in einer Trommel gewaschen, wobei der Trommel zusätzlich Wasser zugeführt wird. Bevorzugt rotiert die Trommel während des Hauptwaschgangs, wobei in der Trommel Mischelemente angeordnet sind, welche derart konfiguriert sind, dass die Zuckerrüben innerhalb der Trommel konstant durchgemischt werden. In der Hauptwäsche werden insbesondere letzte Erdreste von den Zuckerrüben entfernt. Anschließend an die Hauptwäsche kann der Nutzanteil an Zuckerrüben in der Nachwäsche, insbesondere eine Sprühwaschanlage, zusätzlich gewaschen werden. Die Nachwäsche findet insbesondere unter der Zufuhr von Frischwasser statt. Die Nachwäsche ermöglicht vorteilhafterweise, dass Abwasserreste oder Schmutzwasserreste auf den Zuckerrüben abgespült werden. Eine Sprühwaschanlage insbesondere als Druckwäsche kann von besonderem Vorteil sein, da der Wasserverbrauch reduziert werden kann. Die Sprühwaschanlage weist vorzugsweise ein Rollenrost auf, wobei der Nutzanteil an Zuckerrüben über das Rollenrost transportiert wird. Eine Nachwäsche ist nicht zwangsläufig nach der Hauptwäsche notwendig.

Gemäß einer vorteilhaften Ausgestaltung der Erfindung ist vorgesehen, dass das benutzte Wasser, insbesondere von jedem Reinigungsschritt des ersten und/oder dritten Verfahrensschritts, durch mindestens einen Wasserabscheider abgeschieden wird. Es ist denkbar, dass das abgeschiedene Wasser aus der ersten und/oder der zweiten Vorwäsche und/oder der Nachwäsche wiederverwendet wird, insbesondere in der ersten Vorwäsche, zweiten Vorwäsche und/oder der Hauptwäsche. Vorzugsweise umfasst die Sprühwaschanlage einen Wasserabscheider, wobei besonders vorzugsweise das Wasser der Hauptwäsche über den Wasserabscheider der Sprühwaschanlage separiert wird. Dieser Wasserabscheider kann auch als Hauptwasserabscheider verstanden werden. Die jeweiligen Vorwäschen weisen vorzugsweise jeweils einen Wasserabscheider auf, oder lediglich die erste Vorwäsche weist einen Wasserabscheider auf und der Reinigungsschritt im dritten Verfahrensschritt weist einen eigenen Wasserabscheider auf. Es ist wünschenswert, dass insbesondere die zweite Vorwäsche, die Hauptwäsche und die Nachwäsche sich einen Wasserabscheider teilen, um die Anlage möglichst kompakt auszugestalten.

Gemäß einer vorteilhaften Ausgestaltung der Erfindung ist vorgesehen, dass der in der ersten und/oder zweiten Vorwäsche ausgespülte Sand und die Kleinteile durch einen Sandfänger geleitet werden. Der Sandfänger kann derart konfiguriert sein, dass lediglich der ausgespülte Sand aufgefangen wird. Die Kleinteile hingegen können den Sandfänger passieren. Der ausgespülte Sand und die Kleinteile werden bevorzugt zunächst mit dem Abwasser aus der Vorwäsche durch den Sandfänger gespült. Sofern die Anlage eine erste und eine zweite Vorwäsche aufweist, ist es besonders bevorzugt, dass diese sich einen Sandfänger teilen-Somit kann die Anlage möglichst kompakt ausgestaltet werden und die Kosten gesenkt werden. Das Abwasser wird bevorzugt erst stromabwärts des Sandfängers durch einen Wasserabscheider geführt. Der Wasserabscheider kann mittels einer Trennrolle größere Zuckerrübenbruchstücke von den Kleinteilen trennen, wobei die größeren Zuckerrübenbruchstücke dem Nutzanteil an Zuckerrüben zugeführt werden kann. Das durch den Wasserabscheider abgeschiedene Wasser kann erneut in der Vorwäsche und/oder in der Hauptwäsche verwendet werden. Der Vorteil liegt in der weiteren Reduktion des Wasserverbrauchs. Dieser Wasserabscheider kann auch als Nebenwasserabscheider verstanden werden. Sofern die Anlage keine zweite Vorwäsche aufweist, kann der Sandfänger alternativ stromabwärts der Hauptwäsche angeordnet sein und der aus der Hauptwäsche ausgespülte Sand durch den Sandfänger geleitet werden. Es bietet sich an Sand jeweils im ersten Verfahrensschritt und im dritten Verfahrensschritt durch den Sandfänger rauszufiltern, da im gesamten Verfahren viel Sand vorliegen kann. Diesen gilt es herauszufiltern, um Beschädigungen an der Anlage zu vermeiden und/oder diesen zu recyclen.

Gemäß einer vorteilhaften Ausgestaltung der Erfindung ist vorgesehen, dass die im zweiten Verfahrensschritt aussortierten Fremdkörper durch eine zweite Erkennungseinheit geleitet und erneut erkannte Fremdkörper mittels einer zweiten Sortiereinheit gezielt aussortiert werden, wobei die zweite Sortiereinheit insbesondere organisches Material und andere Fremdkörper von den durch die erste Erkennungseinheit nicht erkannten Zuckerrüben trennt. Bevorzugt werden die aussortierten Fremdkörper aus dem zweiten Verfahrensschritt einer zweiten Erkennungs- und Sortiereinheit zugeführt. Die zweite Sortiereinheit ist vorzugsweise derart konfiguriert, dass insbesondere das organische Material und andere Fremdkörper von den im zweiten Verfahrensschritt nicht erkannten nutzbaren Zuckerrüben getrennt werden. Vorteilhafterweise besteht so die Möglichkeit Zuckerrüben, welche im zweiten Verfahrensschritt fälschlicherweise aussortiert wurden, dem Nutzanteil an Zuckerrüben zuzuführen und so eine höheren Anteil an Zuckerrüben bereitzustellen. Beispielsweise kann es sein, dass kleine oder dreckige Zuckerrüben im zweiten Verfahrensschritt durch die erste Erkennungseinheit nicht erkannt wurden und fälschlicherweise aussortiert wurden. Die anderen Fremdkörper können beispielsweise Steine, Flaschen, Plastikteile oder Holz sein. Das organische Material umfasst insbesondere Kraut, Unkraut, Blattreste und aussortierte Zuckerrüben. Die Klassifizierung der erkannten Objekte in Kombination mit der Sortiereinheit kann zusätzlich eine Vorsortierung der Fremdkörper ermöglichen. So können beispielsweise Glasteile und/oder Plastikteile bereits vor bzw. stromaufwärts der weiteren Sortiereinheit aussortiert werden und gesondert entsorgt werden. Stromabwärts der weiteren Sortiereinheit werden die anderen Fremdkörper bevorzugt in die einzelnen Produktgruppen aufgeteilt, insbesondere mittels eines weiteren Sortierverfahrens, oder entsorgt.

In einer weiteren vorteilhaften Ausgestaltung der Erfindung wird das organische Material mit den Kleinteilen, welche nicht durch den Sandfänger aussortiert wurden, zusammengeführt und/oder die größeren Zuckerrübenbruchstücke dem Nutzanteil an Zuckerrüben zugeführt. Vorzugsweise wird zusätzlich Wasser beim Vermischen des organischen Materials mit den Kleinteilen zugeführt. Bevorzugt wird der Massenstrom aus organischem Material und Kleinteilen durch den Nebenwasserabscheider geführt. Das aus dem Nebenabscheider abgeschiedene Wasser kann entweder entsorgt werden oder wiederverwendet werden. Stromabwärts des Nebenwasserabscheiders kann eine Verarbeitungseinheit für organisches Material und Kleinteile angeordnet sein, wobei das organische Material und die Kleinteile zerkleinert werden. Der Vorteil liegt darin, dass das zerkleinerte organische Material beispielsweise Biogasanlagen zugeführt werden kann oder eine anderweite Verwendung findet.

Ein weiterer Gegenstand der Erfindung ist eine Zuckerproduktionsanlage mit einer Vorrichtung zum Bereitstellen eines verarbeitbaren Nutzanteils an Zuckerrüben aus einem Zuckerrüben enthaltenden Massenstrom und einer Schneidemaschine zum Schneiden von Zuckerrübenschnitzeln aus dem verarbeitbaren Nutzanteil von Zuckerrüben, wobei die Vorrichtung zum Bereitstellen des verarbeitbaren Nutzanteils an Zuckerrüben aufweist:
einen Abscheider zum Abscheiden von Kleinteilen aus dem Massenstrom,
eine erste Erkennungseinheit zum automatischen Erkennen von Fremdkörpern in dem Massenstrom,
eine erste Sortiereinheit zum gezielten Aussortieren der erkannten Fremdkörper aus dem Massestrom, um einen Nutzanteil an Zuckerrüben bereitzustellen, und
eine Reinigungseinheit zum Waschen des Nutzanteils unter der Zufuhr von Wasser, um den verarbeitbaren Nutzanteil an Zuckerrüben zu erhalten. Die Zuckerrüben befinden sich nach der Reinigung in einem verarbeitbaren Zustand ohne Fremdkörper. Dieser Nutzanteil kann in einer Schneidemaschine anschließend weiterverarbeitet werden, wobei die Schneidemaschine die Zuckerrüben in Schnitzel schneidet. Die Schnitzel werden bevorzugt in der Zuckerproduktion verwendet. Schnitzel bieten eine größere Oberfläche, so dass der Zucker effizienter aus herausgelöst werden kann.

Bei der Vorrichtung können dieselben Vorteile erreicht werden, wie sie im Zusammenhang mit dem Verfahren beschrieben worden sind.

Eine vorteilhafte Ausgestaltung der Vorrichtung sieht vor, dass der Abscheider als Partikelabscheider ausgestaltet ist und/oder eine erste Vorwäscheeinheit aufweist, wobei die erste Vorwäscheeinheit dazu konfiguriert ist Sand, Kleinteile und/oder Erde aus dem Zuckerrüben enthaltenden Massenstrom unter der Zufuhr von Wasser auszuspülen.

Eine vorteilhafte Ausgestaltung der Vorrichtung sieht vor, dass die Reinigungseinheit insbesondere mehrstufig ausgebildet ist, wobei die Reinigungseinheit insbesondere eine zweite Vorwäscheeinheit zum Ausspülen von Sand und Kleinteilen aus dem Nutzanteil an Zuckerrüben unter der Zufuhr von Wasser und eine Hauptwäscheeinheit aufweist, die zum Waschen des Nutzanteils an Zuckerrüben, insbesondere in einer Trommel, unter der Zufuhr von Wasser ausgebildet ist.

Eine vorteilhafte Ausgestaltung der Vorrichtung sieht vor, dass die Reinigungseinheit eine Nachwäscheeinheit aufweist, insbesondere eine Sprühwaschanlage, aufweist.

Eine vorteilhafte Ausgestaltung der Vorrichtung sieht vor, dass die Reinigungseinheit und/oder die erste Vorwäscheeinheit einen Wasserabscheider zum Abscheiden des benutzten Wassers, insbesondere von jedem Reinigungsschritt, insbesondere des mehrstufigen Reinigungsverfahrens, aufweist.

Eine vorteilhafte Ausgestaltung der Vorrichtung sieht einen Sandfänger zum Abtrennen des in der ersten und/oder zweiten Vorwäscheeinheit ausgespülten Sands vor.

Eine vorteilhafte Ausgestaltung der Vorrichtung sieht vor, dass die Vorrichtung zum Bereitstellen des verarbeitbaren Nutzanteils an Zuckerrüben eine zweite Erkennungs- und Sortiereinheit zum Trennen von den durch die erste Erkennungseinheit nicht erkannten Zuckerrüben von organischem Material aus den in der durch die erste Sortiereinheit abgetrennten Fremdkörpern aufweist.

Bei der Vorrichtung können auch die um Zusammenhang mit dem Verfahren beschriebenen vorteilhaften Ausgestaltungen und Merkmale allein oder in Kombination Anwendung finden.

Weitere Einzelheiten, Merkmale und Vorteile der Erfindung ergeben sich aus den Zeichnungen, sowie aus der nachfolgenden Beschreibung der bevorzugten Ausführungsformen anhand der Zeichnungen. Die Zeichnungen illustrieren dabei lediglich beispielhafte Ausführungsformen der Erfindung, welche den Erfindungsgedanken nicht einschränken.

### Kurze Beschreibung der Figuren

Die **Fig. 1** zeigt ein erstes Ausführungsbeispiel des erfindungsgemäßen Verfahrens.
Die **Fig. 2** zeigt ein zweites Ausführungsbeispiel des erfindungsgemäßen Verfahrens.
Die **Fig. 3** zeigt ein drittes Ausführungsbeispiel des erfindungsgemäßen Verfahrens.

### Ausführungsformen der Erfindung

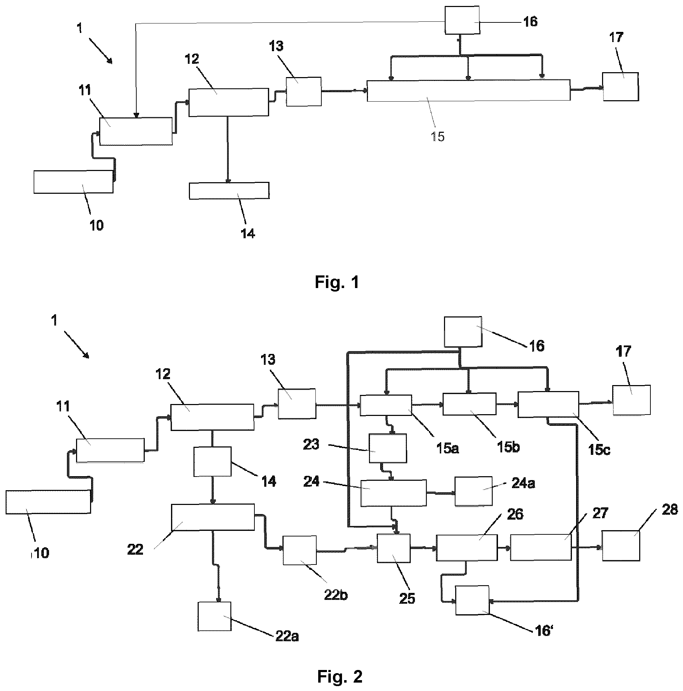

**Fig. 1** zeigt ein erstes Ausführungsbeispiel des erfindungsgemäßen Verfahrens 1 zum Bereitstellen eines verarbeitbaren Nutzanteils an Zuckerrüben 17 aus einem Zuckerrüben enthaltenden Massenstrom. Bevor der die Zuckerrüben enthaltene Massestrom industriell verarbeitet werden kann, ist es erforderlich, Fremdkörper aus diesem zu entfernen und die Zuckerrüben zu reinigen. Aus dem Stand der Technik ist bekannt, dass dies üblicherweise mittels eines Wassertransports bewerkstelligt wird. Die Zuckerrüben werden dabei in Wasser transportiert und durch klassische Gurt- und Trommelsteinfänger, sowie Krautfänger geführt. Abgesehen davon, dass die Zuckerrüben im Aussortierungsverfahren direkt gewaschen werden, bedarf der erschwerte Transport (Kombination aus Zuckerrüben und erheblicher Wassermenge) deutlich mehr Energie und Platz, insbesondere beim Trennen der Zuckerrüben von den Fremdkörpern. Auch die weiteren Vorrichtungen zum Aussortieren der Fremdkörper aus dem Massenstrom benötigen einen enormen Bauraum, hohem Energieaufwand und häufige Instandhaltungsmaßnahmen. Dies führt dazu, dass die Vorrichtung einerseits einen hohen finanziellen Aufwand hat und andererseits kann dies auch zu ungewünschten Stillstandzeiten führen, welche sich zusätzlich negativ auf die Wirtschaftlichkeit einer solchen Vorrichtung auswirken. Darüber hinaus kann das Trennen bei einem Nasstransport durch die Anlage fehleranfällig sein, wobei Fremdkörper unter den Zuckerrüben verbleiben oder vermeintlich nutzbare Zuckerrüben aussortiert oder beschädigt werden im Verfahren. Dies kann sich zusätzlich negativ auf die Wirtschaftlichkeit des Verfahrens auswirken. Weiter diffundiert ein Teil des Zuckers der Zuckerrüben in das Wasser über, wobei sich dies negativ auf den Ertrag an Zucker auswirkt und ferner eine aufwändigere Abwasserreinigung notwendig wird.

Das in Fig. 1 gezeigte Verfahren 1 weist einen Trockentransport 10 auf. Der Massenstrom, beispielsweise ausgehend von einem Rübenlagerplatz umfasst dabei neben den Zuckerrüben auch Fremdkörper. Die Fremdkörper werden bei der Ernte der Zuckerrüben mitaufgelesen, wobei Fremdkörper beispielsweise Steine, Erde, Flaschen (Glas, Plastik und andere), Metalle, Kunststoffe, Holz, Kraut, Blätter etc. sein können. Das erste Ausführungsbeispiel des erfindungsgemäßen Verfahrens 1 ermöglicht es, einen Nutzanteil an Zuckerrüben aus einem solchen Massenstrom kosteneffizient und mit geringem Bauraum verarbeitbar zu machen. Dafür wird der Massenstrom zunächst in einem ersten Verfahrensschritt 11 über oder durch einen Abscheider geführt. Bevorzugt ist der Massenstrom trocken, d.h. es wird vorzugsweise kein Wasser im ersten Verfahrensschritt zugeführt. Zudem kann der erste Verfahrensschritt eine erste Vorwäsche aufweisen, wobei diese insbesondere stromaufwärts des Partikelabscheiders angeordnet ist. Die erste Vorwäsche kann bevorzugt unter der Zufuhr mit Wasser 16 stattfinden, wie in Fig. 1 gezeigt, und Sand und Kleinteile aus dem Massenstrom spülen. Sofern eine erste Vorwäsche unter der Zufuhr von Wasser 16 getätigt wird, ist direkt stromabwärts der ersten Vorwäsche ein Wasserabscheider angeordnet, welcher es ermöglicht einen im Wesentlichen trockenen Massenstrom in den zweiten Verfahrensschritt 12 zu transportieren. Im Wesentlichen trocken kann derart verstanden werden, dass der Massenstrom nicht durch das Wasser transportiert wird, sondern viel mehr auf einen anderen Transportmechanismus wie beispielsweise Förderbänder angewiesen ist.

In einem auf den ersten Verfahrensschritt 11 folgenden zweiten Verfahrensschritt 12 werden die Fremdkörper in dem Massenstrom mittels einer ersten Erkennungseinheit automatisch erkannt und mittels einer ersten Sortiereinheit gezielt aussortiert. Die Sortiereinheit wird bevorzugt von der Erkennungseinheit angesteuert. Die Erkennungseinheit kann die Fremdkörper und die Zuckerrüben mittels optischer Detektoren erkennen, wobei diese bevorzugt auf mindestens einem Förderband transportiert werden. Vorzugsweise führt das Förderband oder die Förderbänder den Massenstrom durch die Erkennungseinheit. Sofern ein Fremdkörper erkannt wird, kann die erste Erkennungseinheit die erste Sortiereinheit derart ansteuern, dass der Fremdkörper aus dem Massenstrom aussortiert wird. Bevorzugt werden die Zuckerrüben nicht von der Sortiereinheit beeinflusst. Wie aus Fig. 1 ersichtlich, gehen von dem zweiten Verfahrensschritt 2 zwei Massenströme aus. Einerseits liegt ein Nutzanteil an Zuckerrüben 13 vor und andererseits die erkannten und aussortierten Fremdkörper 14. Es ist denkbar, dass die durch die erste Erkennungseinheit erkannten Objekte des Massenstroms in Klassen eingestuft werden. Beispielsweise können die erkannten Objekte in die Klassen verwendbare Zuckerrübe, nicht verwendbare Zuckerrübe, Stein, Holz, Glas, Plastik, organisches Material (beispielsweise Kraut, Unkraut) eingeteilt werden. Weiter kann die erste Erkennungseinheit derart die erste Sortiereinheit ansteuern, dass die erkannten Objekte, insbesondere die erkannten Fremdkörper, gezielt in den jeweiligen Klassen aussortiert werden. So werden beispielsweise Steine auf einen ersten Platz sortiert, wobei Glas wiederrum an einen zweiten Platz sortiert wird.

Folgend auf den zweiten Verfahrensschritt 12 werden die Nutzanteile an Zuckerrüben 13 in einem dritten Verfahrensschritt 15 unter der Zufuhr von Wasser 16 gewaschen. Die Nutzanteile an Zuckerrüben 13 sind in einem gereinigten Zustand weiter verarbeitbar. Beispielsweise kann der verarbeitbare Nutzanteil an Zuckerrüben 17 einer Schneidemaschine zugeführt werden, wobei die Schneidemaschine die Zuckerrüben zu Zuckerrübenschnitzeln verarbeitet. Eben diese Schnitzel können dann in der Zuckerproduktion verwendet werden.

**Fig. 2** zeigt ein zweites Ausführungsbeispiel des erfindungsgemäßen Verfahrens 1. Die wesentlichen Unterschiede zum ersten Ausführungsbeispiel liegen in der Weiterbehandlung der erkannten und aussortierten Fremdkörper 14 und dem Reinigungsverfahren im dritten Verfahrensschritt. So ist das Reinigungsverfahren im zweiten Ausführungsbeispiel in ein mehrstufiges Reinigungsverfahren unterteilt. Zuerst werden in einer zweiten Vorwäsche 15a im Wesentlichen Sand und Kleinteile 23 aus dem Massenstrom an Nutzanteilen an Zuckerrüben 13 ausgespült. Hierfür weist die zweite Vorwäsche 15a eine Wasserzufuhr 16 auf. Die erste und/oder die zweite Vorwäsche 15a finden vorzugsweise in einer Vorwaschtrommel statt.

Erst danach geht der Nutzanteil an Zuckerrüben 13, insbesondere ohne Sand und Kleinteile 23, in eine Hauptwäsche 15b. Die Hauptwäsche 15b kann die wesentliche Reinigungsarbeit erledigen, wobei dies insbesondere in einer Trommelwäsche ausgeführt wird. Auch die Hauptwäsche 15b kann eine eigene Wasserzufuhr 16 aufweisen. Es ist durchaus denkbar, dass die zweite Vorwäsche 15a und die Hauptwäsche 15b in einem Schritt ausgeführt werden, wobei bevorzugt Sand und Kleinteile 23 abgeschieden werden können. Da es durchaus möglich ist, dass die Zuckerrüben in der Hauptwäsche 15b in Kontakt mit verdrecktem Wasser oder Abwasser stehen, kann zusätzlich eine Nachwäsche 15c ausgeführt werden. Die Nachwäsche 15c ist vorzugsweise lediglich als Sprühwaschanlage ausgestaltet. Der Nutzanteil an Zuckerrüben 13, welcher die Hauptwäsche 15b verlässt, wird bevorzugt in der Nachwäsche 15c nur mit Wasser besprüht, um jegliche Reste an Abwasser oder desgleichen von den Zuckerrüben zu spülen. Das genutzte Wasser der Nachwäsche 15c kann aufgrund der Vor- und Hauptwäsche 15a, 15b einen geringen Verschmutzungsgrad aufweisen, wobei dieses Wasser mittels eines Wasserabscheiders abgeschieden werden kann und in der ersten oder zweiten Vor- und/oder Hauptwäsche 15a, 15b wiederverwendet werden kann. Alternativ oder zusätzlich kann zumindest ein Teil des abgeschiedenen Wassers als Abwasser 16' abgeführt werden. Dazu kann die Nachwäsche 15c einen Hauptwasserabscheider aufweisen. Somit liegt ein verarbeitbarer Nutzanteil an Zuckerrüben 17 vor. Es kann durchaus wünschenswert sein, die Zuckerrüben 17 nach dem dritten Verfahrensschritt 15 durch eine Trockeneinheit zu führen. Diese ermöglicht das Trocknen der Zuckerrüben, um jegliches Verfaulen oder dergleichen zu vermeiden.

Der Sand und die Kleinteile 23 die durch die zweite Vorwäsche 15a ausgespült werden, werden bevorzugt durch einen Sandfänger 24 geführt. Der Sandfänger 24 ist derart konfiguriert, dass der Sandfänger 24 den Sand 24a von den Kleinteilen trennt. Sofern in einem ersten Verfahrensschritt bereits eine erste Vorwäsche getätigt wird, ist es denkbar, dass der ausgespülte Sand und die Kleinteile auch durch den Sandfänger 24 geleitet werden. Alternativ kann jede Vorwäsche einen eigenen Sandfänger 24 aufweisen.

Weiter werden die im zweiten Verfahrensschritt 12 erkannten und aussortierten Fremdkörper 14 bevorzugt durch eine zweite Erkennungs- und Sortiereinheit 22 geleitet, wobei die zweite Sortiereinheit 22 insbesondere einen Nutzanteil an Zuckerrüben von dem organische Material 22b und von den anderen Fremdkörpern 22a trennt. Beispielsweise können verdreckte oder kleine Zuckerrüben durch die erste Erkennungseinheit fälschlicherweise als Fremdkörper erkannt und aussortiert werden, wobei dieser Fehler durch die zweite Erkennungseinheit und zweite Sortiereinheit 22 egalisiert werden kann. Die anderen Fremdkörper 22a können beispielsweise Steine, Flaschen, Plastikteile oder Holz sein. Das organische Material 22b umfasst insbesondere Kraut und die anderen Fremdkörper 22a werden vorzugsweise einem weiteren Trennverfahren zugeführt oder entsorgt. Das organische Material 22b hingegen wird bevorzugt weiterverarbeitet und kann nutzbar gemacht werden. Dafür werden die organischen Materialien 22b mit den Kleinteilen, die durch den Sandfänger 24 geleitet wurden, zusammengeführt. Die Kleinteile und das organische Material 25 werden insbesondere unter der Zufuhr von Wasser 16 vermischt. Danach werden die Kleinteile und das organische Material 25 in den Nebenwasserabscheider 26 transportiert, wobei hier vorzugsweise das Abwasser 16' abgeschieden wird. Darauffolgend werden die durchgemischten Kleinteile und das organische Material 25, im Wesentlichen trocken, aufbereitet. Die Aufbereitung der Kleinteile und des organischen Materials 27 kann insbesondere eine Zerkleinerung der Masse umfassen, wobei demzufolge lediglich wiederverwendbares Material 28 überbleibt. Das wiederverwendbare Material 28 kann entweder entsorgt oder verwendet werden.

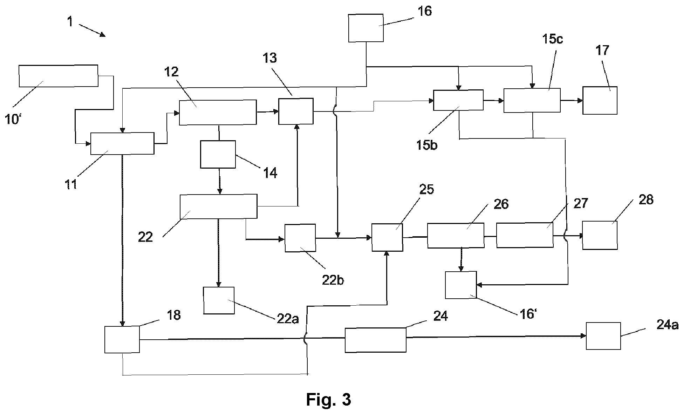

**Fig. 3** zeigt ein drittes Ausführungsbeispiel des erfindungsgemäßen Verfahrens. Im Gegensatz zu dem ersten und dem zweiten Ausführungsbeispiel basiert das dritte Ausführungsbeispiel zunächst auf einem Nasstransport 10` des Zuckerrüben enthaltenden Massenstroms. Im ersten Verfahrensschritt 11 wird ein als Partikelabscheider 18 ausgebildeter Abscheider verwendet. Der erste Verfahrensschritt 11 weist zusätzlich eine erste Vorwäsche und einen Wasserabscheider auf, wobei der Wasserabscheider bevorzugt zwischen dem Partikelabscheider 18 und der Vorwäsche angeordnet ist. Aufgrund der ersten Vorwäsche wird dem ersten Verfahrensschritt 11 Wasser 16 zugeführt, da die erste Vorwäsche bevorzugt unter der Zufuhr von Wasser 16 getätigt wird. Erfindungsgemäß ist es wünschenswert, das der zweite Verfahrensschritt 12 trocken oder zumindest im Wesentlichen trocken ausgeführt wird.

Der Partikelabscheider 18 trennt insbesondere Kleinteile 25 und Sand voneinander, welche im ersten Verfahrensschritt 11 aus dem Zuckerrüben enthaltenden Massenstrom ausgespült worden. Der Sand 24a wird dann durch einen Sandfänger 24 geleitet, wodurch der Sand 24a aufgefangen wird und aus dem Verfahren entfernt werden kann. Die Kleinteile 25 aus dem Partikelabscheider 18 werden den Kleinteilen 25 und organischen Materialien 22b beigefügt, welche beim zweiten Verfahrensschritt 12 herausgefiltert worden. Dafür wird zunächst der Massenstrom aus dem ersten Verfahrensschritt 11 in den zweiten Verfahrensschritt 12 eingeleitet. Dieser weist erfindungsgemäß zunächst eine erste Erkennungseinheit und eine erste Sortiereinheit auf, welche Fremdkörper innerhalb des Massenstroms automatisch erkennen und gezielt aussortieren, so dass ein Nutzanteil an Zuckerrüben 13 bereitgestellt werden kann. Beim Nasstransport kann insbesondere eine optische Erkennung zu Fehlern bei der Detektion von Zuckerrüben führen. Daher wird dies bevorzugt im Wesentlichen trocken oder vollständig trocken getätigt. Weiter kann es aufgrund von Verschmutzungen oder sehr kleinen Zuckerrüben oder Bruchteilen von Zuckerrüben vorkommen, dass nutzbare Zuckerrüben aussortiert werden. Dafür kann vorzugsweise eine zweite Erkennungs- und Sortiereinheit 22 der ersten Erkennungseinheit und ersten Sortiereinheit nachgeschaltet sein. Der zweiten Erkennungs- und Sortiereinheit 22 werden dazu die erkannten Fremdköper 14 aus der ersten Erkennungs- und Sortiereinheit zugeführt. Die zweite Erkennungs- und Sortiereinheit 22 kann aus diesen erkannten Fremdkörpern 14 Nutzanteile an Zuckerrüben 13, andere Fremdkörper 22a und organisches Material 22b trennen. Somit kann der Nutzanteil an Zuckerrüben 13 aus dem eingehenden Massenstrom nochmals erhöht werden und die Wirtschaftlichkeit des Verfahrens verbessert werden.

Der Nutzanteil an Zuckerrüben 13 wird im dritten Verfahrensschritt unter der Zufuhr von Wasser 16 gewaschen. Im dritten Ausführungsbeispiel wird eine Hauptwäsche 15b und eine Nachwäsche 15c gezeigt. Es ist durchaus denkbar, dass eine zweite Vorwäsche 15 noch vor der Hauptwäsche 15b angeordnet werden kann. Nach dem Reinigungsschritt liegt ein verarbeitbarer Nutzanteil an Zuckerrüben 17 vor.

Die organischen Materialien 22b und die Kleinteile 25 werden unter der Zufuhr von Wasser 16 zusammengeführt, über einen Nebenwasserabscheider 26 geführt und aufbereitet 27, so dass ein wiederverwendbares Material 28 entsteht.

### Bezugszeichenliste

1 - Verfahren zum Bereitstellen eines verarbeitbaren Nutzanteils an Zuckerrüben
10 - Trockentransport
10' - Nasstransport
11 - erste Verfahrensschritt
12 - zweite Verfahrensschritt
13 - Nutzanteil an Zuckerrüben
14 - erkannte Fremdkörper
15 - dritter Verfahrensschritt
15a - zweite Vorwäsche
15b - Hauptwäsche
15c - Nachwäsche
16 - Wasser
16' - Abwasser
17 - verarbeitbarer Nutzanteil an Zuckerrüben
18 - Partikelabscheider
22 - zweite Erkennungs- und Sortiereinheit
22a - andere Fremdkörper
22b - organisches Material
23 - Sand und Kleinteile
24 - Sandfänger
24a - Sand
25 - Kleinteile und organisches Material
26 - Nebenwasserabscheider
27 - Aufbereitung Kleinteile und organisches Material
28 - wiederverwendbares Material

## Patentansprüche

1. Verfahren (1) zum Bereitstellen eines verarbeitbaren Nutzanteils an Zuckerrüben (17) aus einem Zuckerrüben enthaltenden Massenstrom, wobei das Verfahren (1) wenigstens die folgenden Schritte umfasst:
I. in einem ersten Verfahrensschritt (11) werden in einem Abscheider Kleinteile aus dem Massenstrom entfernt;
II. in einem auf den ersten Verfahrensschritt (11) folgenden zweiten Verfahrensschritt (12) werden Fremdkörper mittels einer ersten Erkennungseinheit in dem Massenstrom automatisch erkannt und die erkannten Fremdkörper (14) mittels einer ersten Sortiereinheit gezielt aussortiert, um einen Nutzanteil an Zuckerrüben (13) bereitzustellen;
III. in einem auf den zweiten Verfahrensschritt (12) folgenden dritten Verfahrensschritt (15) wird der Nutzanteil an Zuckerrüben (13) unter der Zufuhr von Wasser (16) gewaschen, so dass ein verarbeitbarer Nutzanteil an Zuckerrüben (17) bereitgestellt wird.

2. Verfahren (1) nach Anspruch 1, **dadurch gekennzeichnet, dass** in dem zweiten Verfahrensschritt (12) Objekte des Massenstroms, insbesondere Zuckerrüben und Fremdkörper, erkannt werden und die erkannten Objekte klassifiziert werden.

3. Verfahren (1) nach einem der vorhergehenden Ansprüche, **dadurch gekennzeichnet, dass** im ersten Verfahrensschritt der Abscheider ein Partikelabscheider (18) ist und/oder der erste Verfahrensschritt eine erste Vorwäsche aufweist, wobei die Vorwäsche insbesondere Sand, Kleinteile und/oder Erde aus dem Zuckerrüben enthaltenden Massenstrom ausspült und insbesondere stromaufwärts des Partikelabscheiders (18) angeordnet ist.

4. Verfahren (1) nach einem der vorhergehenden Ansprüche, **dadurch gekennzeichnet, dass** der dritte Verfahrensschritt (15) ein insbesondere mehrstufiges Reinigungsverfahren umfasst, wobei insbesondere zuerst in einer zweiten Vorwäsche (15a) Sand und Kleinteile (23) aus dem Nutzanteil an Zuckerrüben (13) unter der Zufuhr von Wasser (16) ausgespült werden und darauffolgend der Nutzanteil an Zuckerrüben (13) in einer Hauptwäsche (15b), insbesondere in einer Trommel, unter der Zufuhr von Wasser (16) gewaschen wird und/oder der Nutzanteil an Zuckerrüben (1) in einer Nachwäsche (15c), insbesondere in einer Sprühwaschanlage, gewaschen wird.

5. Verfahren (1) nach einem der Ansprüche 3 oder 4, **dadurch gekennzeichnet, dass** das benutzte Wasser, insbesondere von jedem Reinigungsschritt des ersten und/oder dritten Verfahrensschritts, durch mindestens einen Wasserabscheider abgeschieden wird.

6. Verfahren (1) nach einem der Ansprüche 3 bis 5, **dadurch gekennzeichnet, dass** der in der ersten und/oder zweiten Vorwäsche (15a) ausgespülte Sand und die Kleinteile (23) durch einen Sandfänger (24) geleitet werden.

7. Verfahren (1) nach einem der vorhergehenden Ansprüche, **dadurch gekennzeichnet, dass** die im zweiten Verfahrensschritt (12) aussortierten Fremdkörper durch eine zweite Erkennungseinheit geleitet und erneut erkannte Fremdkörper mittels einer zweiten Sortiereinheit (22) gezielt aussortiert werden, wobei die zweite Sortiereinheit (22) insbesondere organisches Material (22b) und andere Fremdkörper (22a) von den durch die erste Erkennungseinheit nicht erkannten Zuckerrüben trennt.

8. Zuckerproduktionsanlage mit einer Vorrichtung zum Bereitstellen eines verarbeitbaren Nutzanteils an Zuckerrüben (13) aus einem Zuckerrüben enthaltenden Massenstrom und einer Schneidemaschine zum Schneiden von Zuckerrübenschnitzeln aus dem verarbeitbaren Nutzanteil von Zuckerrüben (17), **dadurch gekennzeichnet, dass** die Vorrichtung zum Bereitstellen des verarbeitbaren Nutzanteils an Zuckerrüben (17) aufweist:
einen Abscheider zum Abscheiden von Kleinteilen aus dem Massenstrom,
eine erste Erkennungseinheit zum automatischen Erkennen von Fremdkörpern in dem Massenstrom,
eine erste Sortiereinheit zum gezielten Aussortieren der erkannten Fremdkörper (14) aus dem Massestrom, um einen Nutzanteil an Zuckerrüben (13) bereitzustellen, und
eine Reinigungseinheit zum Waschen des Nutzanteils unter der Zufuhr von Wasser (16), um den verarbeitbaren Nutzanteil an Zuckerrüben (17) zu erhalten.

9. Zuckerproduktionsanlage nach Anspruch 8, **dadurch gekennzeichnet, dass** der Abscheider als Partikelabscheider (18) ausgestaltet ist und/oder eine erste Vorwäscheeinheit aufweist, wobei die erste Vorwäscheeinheit dazu konfiguriert ist Sand, Kleinteile und/oder Erde aus dem Zuckerrüben enthaltenden Massenstrom unter der Zufuhr von Wasser (16) auszuspülen.

10. Zuckerproduktionsanlage nach Anspruch 8 oder 9, **dadurch gekennzeichnet, dass** die Reinigungseinheit insbesondere mehrstufig ausgebildet ist, wobei die Reinigungseinheit insbesondere eine zweite Vorwäscheeinheit (15a) zum Ausspülen von Sand und Kleinteilen aus dem Nutzanteil an Zuckerrüben (13) unter der Zufuhr von Wasser (16) und eine Hauptwäscheeinheit (15b) aufweist, die zum Waschen des Nutzanteils an Zuckerrüben (13), insbesondere in einer Trommel, unter der Zufuhr von Wasser (16) ausgebildet ist.

11. Zuckerproduktionsanlage nach Anspruch 10, **dadurch gekennzeichnet, dass** die Reinigungseinheit eine Nachwäscheeinheit (15c) aufweist, insbesondere eine Sprühwaschanlage, aufweist.

12. Zuckerproduktionsanlage nach einem der Ansprüche 10 oder 11, **dadurch gekennzeichnet, dass** die Reinigungseinheit und/oder die erste Vorwäscheeinheit einen Wasserabscheider zum Abscheiden des benutzten Wassers (16`), insbesondere von jedem Reinigungsschritt, insbesondere des mehrstufigen Reinigungsverfahrens, aufweist.

13. Zuckerproduktionsanlage nach einem der Ansprüche 10 bis 12, **gekennzeichnet durch** einen Sandfänger (24) zum Abtrennen des in der ersten und/oder zweiten Vorwäscheeinheit (15a) ausgespülten Sands (23) aufweist.

14. Zuckerproduktionsanlage nach einem der Ansprüche 8 bis 13, **dadurch gekennzeichnet, dass** die Vorrichtung zum Bereitstellen des verarbeitbaren Nutzanteils an Zuckerrüben (17) eine zweite Erkennungs- und Sortiereinheit (22) zum Trennen von den durch die erste Erkennungseinheit nicht erkannten Zuckerrüben (13) von organischem Material (22b) aus den in der durch die erste Sortiereinheit abgetrennten Fremdkörpern (14) aufweist.
